# DEMANDE DE BREVET EUROPEEN

(11) **EP 4 787 179 A1**
(43) Date de publication de la demande: **05.08.2026**
(21) Numéro de dépôt: 26153526.4
(22) Date de dépôt: 22.01.2026
(51) Int. Cl.: G06F 13/42

(54) **PROCEDE DE TRANSFERT DE DONNEES SUR UNE LIAISON SPI A CINQ FILS**

(30) Priorité: 04.02.2025 EP 25315033; 03.07.2025 FR 2507513
(71) Demandeur: STMicroelectronics International N.V., 1228 Plan-les-Ouates, Geneva (CH)
(72) Inventeur: GENTIT, Jean-Marc, 38320 HERBEYS (FR)
(74) Mandataire: Cabinet Beaumont

(57) **Abrégé**

Procédé de transfert de données sur une liaison (106) SPI à cinq fils entre un circuit maître (102) et un circuit esclave (104), dans lequel :
- les données sont transférées par paquets (30) comprenant chacun une charge utile (34) et un en-tête (32) spécifiant la longueur de la charge utile, et
- lors d'un transfert de données entre les circuits maître et esclave, le circuit maître définit un nombre N d'octets à transférer, puis détermine, après un transfert de N octets du circuit maître au circuit esclave et de N octets du circuit esclave au circuit maître, un nombre d'octets restants à transférer du circuit esclave au circuit maître à partir d'une valeur de la longueur de la charge utile incluse dans l'en-tête d'un paquet de données transféré du circuit esclave au circuit maître, cette valeur étant lue par le circuit maître.

## Description

### Domaine technique

La présente description concerne de façon générale le domaine des protocoles de communication et des transferts de données sur une liaison de type interface périphérique série, ou SPI (« Serial Peripheral Interface » en anglais).

### Technique antérieure

Une liaison, ou bus, SPI est un bus de données série utilisé pour réaliser un transfert de données entre un circuit maître et un ou plusieurs circuits esclaves. Ce type de liaison fait appel à un protocole de communication série synchrone et est utilisé notamment pour des communications sur de courtes distances, par exemple dans des systèmes embarqués. Une telle liaison peut servir par exemple à coupler un microcontrôleur à des circuits périphériques tels que des capteurs ou des dispositifs mémoire. Par exemple, avec une telle liaison SPI, les accès mémoire peuvent être directs (type DMA ou « Direct Memory Access » en anglais), ce qui limite par exemple l'impact des échanges de données réalisés avec un microprocesseur de calcul d'un système doté d'une telle liaison SPI.

Le transfert de données sur un bus SPI est réalisé en utilisant quatre signaux logiques chacun transmis sur un fil du bus qui lui est propre :
- signal MOSI (« Master Output, Slave Input » en anglais), servant au transfert des données du circuit maître vers le circuit esclave ;
- signal MISO (« Master Input, Salve Output » en anglais), servant au transfert des données allant du circuit esclave au circuit maître ;
- signal SCLK (« Serial Clock » en anglais), correspondant à un signal d'horloge généré par le circuit maître et servant notamment à cadencer les transferts de données entre les circuits maître et esclave ;
- signal SS (« Slave Select » en anglais), correspondant à un signal de sélection de circuit esclave et qui est généré par le circuit maître.

Dans le protocole de communication utilisé sur une liaison SPI, les données sont envoyées par paquets comprenant chacun une charge utile, c'est-à-dire les informations que l'on souhaite transmettre, et des données de contrôle. La transmission des données par paquets permet notamment de conserver une bonne intégrité des données transmises, de faciliter la détection d'erreur et d'avoir une bonne efficacité de transmission des données.

Pour une utilisation dans un système embarqué, plusieurs contraintes doivent être prises en compte :
- Consommation d'énergie : un système embarqué fonctionne généralement dans un environnement contraint en termes de consommation énergétique, comme par exemple lorsqu'il est alimenté par batterie. Une gestion efficace de l'utilisation de l'énergie au cours des transferts de données réalisés par le système embarqué est importante pour maintenir autant que possible une bonne durée de vie de la ou des batteries, et assurer un fonctionnement fiable du système.
- Contrôle de l'intégrité des données transférées : les flux de données entre les circuits doivent être gérés de manière à réduire ou empêcher autant que possible la perte ou l'endommagement des données transférées. Une telle gestion est importante notamment lorsque les débits de transmission et/ou les capacités de traitement des circuits sont variables.

Or, une liaison SPI classique n'est pas le type de liaison la mieux adaptée pour répondre à de telles contraintes. De plus, une liaison SPI classique n'est pas optimisée pour réaliser un transfert de données bidirectionnel simultané, ce qui conduit à un manque d'efficacité et des latences. En outre, le protocole utilisé sur une liaison SPI manque de robustesse, en particulier concernant les mécanismes de gestion d'erreurs, pouvant conduire à une mauvaise intégrité des données.

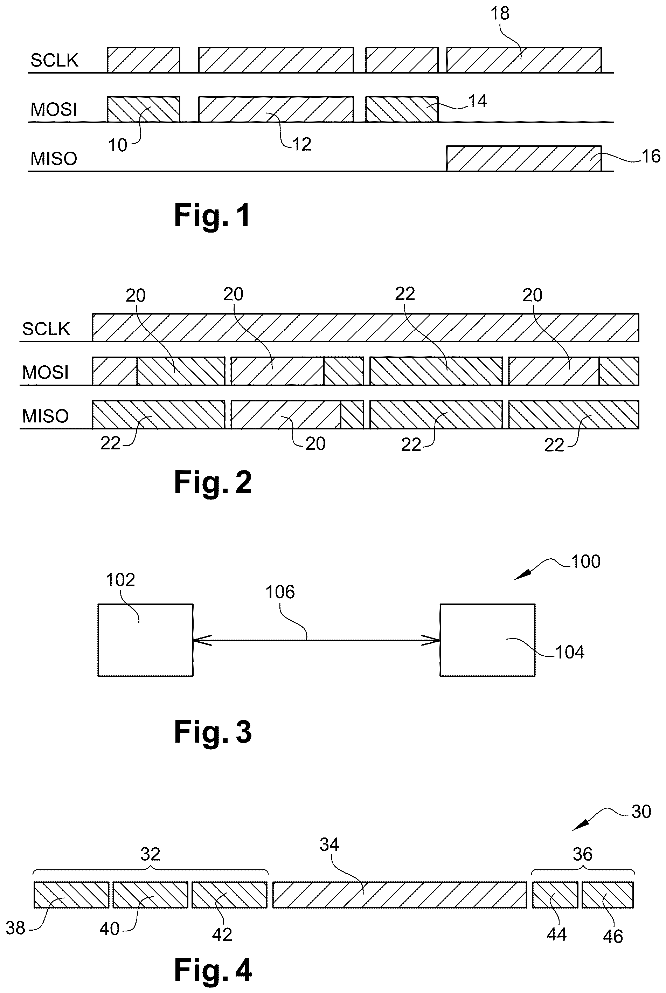

La figure 1 représente un exemple de transmission de données half-duplex, ou semi-duplex ou bidirectionnelle à alternat, réalisée sur une liaison SPI entre un circuit maître et un circuit esclave. Sur cette figure, la référence 10 désigne des données de commande émises par le circuit maître en amont d'une transmission d'un paquet de données, désigné par la référence 12, comprenant une charge utile à envoyer depuis le circuit maître vers le circuit esclave. La référence 14 désigne des données de commande émises par le circuit maître en amont d'une transmission de données, désignées par la référence 16, comprenant une charge utile à envoyer depuis le circuit esclave vers le circuit maître. Les envois de ces données sont cadencés par un signal d'horloge 18. Sur cette figure, le signal SS n'est pas représenté. Dans une telle transmission, la non simultanéité de la transmission des données depuis le circuit maître vers le circuit esclave et de celle des données depuis le circuit esclave vers le circuit maître entraîne une perte de bande passante et une augmentation de la latence du système.

La figure 2 représente un exemple de transmission full-duplex, ou duplex intégral ou bidirectionnelle simultanée, réalisée sur une liaison SPI entre un circuit maître et un circuit esclave, en utilisant des intervalles de temps fixes (« slot » en anglais). Une telle communication full-duplex permet la transmission et la réception simultanées de données entre les circuits maître et esclave, améliorant ainsi l'efficacité et la vitesse des communications par rapport à une transmission semi-duplex. Toutefois, le système est dans ce cas continuellement en train d'envoyer et recevoir des données de la taille des slots entre les circuits maître et esclave, que des charges utiles soient présentes ou non dans les paquets de données transmis. Sur la figure 2, la référence 20 désigne les paquets de données comprenant une charge utile, et la référence 22 désigne les paquets de données ne comprenant pas de charge utile. De plus, sur cette figure, le signal SS n'est pas représenté. Cette approche augmente la latence de transmission du système, et demande un temps d'attente au début de chaque slot pour envoyer des données utiles.

### Résumé de l'invention

Il existe un besoin de proposer un procédé de transfert de données sur une liaison SPI ne présentant pas au moins une partie des inconvénients des solutions existantes.

Un mode de réalisation pallie tout ou partie des inconvénients des solutions connues et propose un procédé de transfert de données sur une liaison de type interface périphérique série, SPI, à cinq fils entre au moins un circuit maître et au moins un circuit esclave, dans lequel :
- les données sont transférées par paquets comprenant chacun une charge utile et un en-tête spécifiant la longueur de la charge utile du paquet, et
- lors d'un transfert de données entre les circuits maître et esclave, le circuit maître définit un nombre N d'octets à transférer, puis détermine, après un transfert de N octets du circuit maître au circuit esclave et de N octets du circuit esclave au circuit maître, un nombre d'octets restants à transférer du circuit esclave au circuit maître à partir d'une valeur de la longueur de la charge utile incluse dans l'en-tête d'au moins un paquet de données transféré du circuit esclave au circuit maître, cette valeur étant lue par le circuit maître.

Selon un mode de réalisation particulier, le nombre N d'octets est supérieur ou égal au nombre d'octets de l'en-tête d'un des paquets de données.

Selon un mode de réalisation particulier, lors d'un transfert, initié par le circuit maître et allant du circuit maître au circuit esclave, d'au moins un premier paquet de données dont la charge utile n'est pas nulle, le nombre N d'octets est défini comme étant égal à la longueur totale du premier paquet de données.

Selon un mode de réalisation particulier, lors du transfert du premier paquet de données, si la charge utile d'au moins un deuxième paquet de données, transféré du circuit esclave au circuit maître parallèlement au premier paquet de données, comporte un nombre d'octets inférieur à celui de la charge utile du premier paquet de données, le circuit esclave ajoute des octets Null à la charge utile du deuxième paquet de données tel que la longueur totale du deuxième paquet de données soit égale à la longueur totale du premier paquet de données.

Selon un mode de réalisation particulier, lors du transfert du premier paquet de données, si la charge utile d'un deuxième paquet de données, transféré du circuit esclave au circuit maître parallèlement au premier paquet de données, comporte un nombre d'octets supérieur à celui de la charge utile du premier paquet de données, le circuit maître ajoute des octets Null à la charge utile du premier paquet de données tel que la longueur totale du premier paquet de données soit égale à la longueur totale du deuxième paquet de données.

Selon un mode de réalisation particulier, le transfert du premier paquet de données est initié par le circuit maître par l'envoi d'un signal de réveil au circuit esclave, et le premier paquet de données est transféré après la réception, par le circuit maître, d'un signal d'acquittement envoyé par le circuit esclave en réponse à la réception du signal de réveil.

Selon un mode de réalisation particulier, lors d'un transfert, initié par le circuit esclave et allant du circuit esclave au circuit maître, d'un troisième paquet de données dont la charge utile n'est pas nulle, le nombre N d'octets est défini comme étant égal au nombre d'octets de l'en-tête d'un des paquets de données ou égal à la longueur totale d'un quatrième paquet de données transféré du circuit maître au circuit esclave parallèlement au troisième paquet de données.

Selon un mode de réalisation particulier, lors du transfert du troisième paquet de données, si la charge utile d'un quatrième paquet de données, transféré du circuit maître au circuit esclave parallèlement au troisième paquet de données, comporte un nombre d'octets inférieur à celui de la charge utile du troisième paquet de données, le circuit maître ajoute des octets Null à la charge utile du quatrième paquet de données tel que la longueur totale du quatrième paquet de données soit égale à la longueur totale du troisième paquet de données.

Selon un mode de réalisation particulier, lors du transfert du troisième paquet de données, si la charge utile d'un quatrième paquet de données, transféré du circuit maître au circuit esclave parallèlement au troisième paquet de données, comporte un nombre d'octets supérieur à celui de la charge utile du troisième paquet de données, le circuit esclave ajoute des octets Null à la charge utile du troisième paquet de données tel que la longueur totale du troisième paquet de données soit égale à la longueur totale du quatrième paquet de données.

Selon un mode de réalisation particulier, le transfert du troisième paquet de données est initié par le circuit esclave par l'envoi d'un signal de réveil au circuit maître, et le troisième paquet de données est transféré après la réception, par le circuit esclave, d'un signal d'acquittement envoyé par le circuit maître en réponse à la réception du signal de réveil.

Selon un mode de réalisation particulier, préalablement à un transfert de données entre les circuits maître et esclave, le circuit esclave est configuré tel qu'il puisse recevoir un paquet de données dont la longueur totale est égale à une longueur maximale prédéfinie d'un paquet de données.

Selon un mode de réalisation particulier, le transfert de données entre les circuits maître et esclave est synchronisé par un signal d'horloge envoyé par le circuit maître sur un premier des cinq fils, le transfert de données depuis le circuit maître vers le circuit esclave est réalisé sur un deuxième des cinq fils, le transfert de données depuis le circuit esclave vers le circuit maître est réalisé sur un troisième des cinq fils, l'envoi de signaux de commande depuis le circuit maître vers le circuit esclave est réalisé sur un quatrième des cinq fils, et l'envoi de signaux de commande depuis le circuit esclave vers le circuit maître est réalisé sur un cinquième des cinq fils.

Selon un mode de réalisation particulier, l'en-tête de chaque paquet de données comporte au moins un champ de robustesse et un champ d'identification de type de protocole, et/ou chaque paquet de données comporte un champ pied de page.

Il est également proposé un circuit électronique comprenant au moins une interface périphérique série, configuré pour mettre en œuvre le procédé selon un mode de réalisation particulier.

Il est également proposé un système électronique comprenant plusieurs circuits électroniques selon un mode de réalisation particulier et couplés entre eux par au moins un bus de type SPI.

Les termes « premier », « deuxième », « troisième » et « quatrième » indiqués ci-dessus ne présument pas d'un ordre d'envoi de ces paquets de données.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un exemple de transfert de données de type half-duplex sur une liaison SPI entre des circuits maître et esclave ;
la figure 2 représente un exemple de transfert de données de type full-duplex sur une liaison SPI entre des circuits maître et esclave, utilisant des intervalles de temps fixes pour les envois des paquets de données ;
la figure 3 représente schématiquement un exemple de système électronique comprenant des circuits électroniques couplés entre eux par une liaison SPI selon un mode de réalisation particulier ;
la figure 4 représente schématiquement un exemple de paquet de données utilisé par un procédé de transfert de données sur une liaison SPI selon un mode de réalisation particulier ;
la figure 5 représente des exemples de signaux émis lors de la mise en œuvre du procédé de transfert de données sur une liaison SPI lors d'un envoi de paquet de données initié par le circuit maître, selon un mode de réalisation particulier ;
la figure 6 représente des exemples de signaux émis lors de la mise en œuvre du procédé de transfert de données sur une liaison SPI lors d'un envoi de paquet de données initié par le circuit esclave, selon un mode de réalisation particulier ;
la figure 7 représente, sous la forme d'un logigramme, un exemple d'étapes mises en œuvre par un circuit maître lors d'un procédé de transfert de données sur une liaison SPI selon un mode de réalisation particulier ;
la figure 8 représente, sous la forme d'un logigramme, un exemple d'étapes mises en œuvre par un circuit esclave lors d'un procédé de transfert de données sur une liaison SPI selon un mode de réalisation particulier ;
la figure 9, la figure 10, la figure 11 et la figure 12 représentent des exemples de transferts de données obtenus par la mise en œuvre d'un procédé de transfert de données sur une liaison SPI selon un mode de réalisation particulier ;

la figure 13, la figure 14 et la figure 15 représentent des exemples de signaux de transferts de données obtenus par la mise en œuvre d'un procédé de transfert de données sur une liaison SPI selon un mode de réalisation particulier.

### Description des modes de réalisation

De mêmes éléments ont été désignés par de mêmes références dans les différentes figures. **En** particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. **En** particulier, différents éléments tels que les circuits et la liaison SPI, différentes étapes mises en œuvre et le codage nécessaire à la mise en œuvre de ces étapes ne sont pas détaillés. L'homme du métier sera à même de réaliser de manière détaillée ces éléments à partir de la description fonctionnelle donnée ici.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés (en anglais « coupled ») entre eux, cela signifie que ces deux éléments peuvent être connectés ou être reliés par l'intermédiaire d'un ou plusieurs autres éléments. **En** outre, les termes « couplé », « relié » et « connecté » sont utilisés ici pour désigner des couplages, ou des liaisons, ou des connexions, électriques.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % près, de préférence à 5 % près.

De même, sans indication contraire, les gammes de valeurs indiquées incluent les bornes de ces gammes.

La figure 3 représente schématiquement un exemple de système électronique 100 dans lequel un procédé de transfert de données sur une liaison SPI selon un mode de réalisation particulier est mis en œuvre. Le système électronique 100 comporte plusieurs circuits électroniques 102, 104 comprenant chacun une interface périphérique série et couplés entre eux par au moins un bus 106 de type SPI. Chacun des circuits électroniques 102, 104 comporte au moins une interface périphérique série permettant la mise en œuvre du procédé de transfert de données. Le bus 106, c'est-à-dire la liaison SPI du système électronique 100, comporte cinq fils sur chacun desquels un signal particulier est destiné à être transmis. Sur l'exemple de la figure 3, un premier circuit électronique, par exemple un microcontrôleur hôte, forme un circuit maître 102 couplé par le bus 106 à un deuxième circuit électronique, par exemple un coprocesseur, formant un circuit esclave 104.

Dans la configuration décrite ici, le transfert de données entre les circuits maître et esclave 102, 104 est synchronisé, ou cadencé, par un signal d'horloge envoyé par le circuit maître 102 sur un premier des cinq fils et qui correspond au signal SCLK. Un signal MASTER-CS (« Master Chip Select » en anglais), correspondant à un signal de sélection et/ou de réveil d'un circuit esclave ou à un signal d'acquittement suivant le circuit initiant le transfert de données, est généré par le circuit maître sur un deuxième des cinq fils. Un signal SLAVE-RDY (« Slave Ready » en anglais), correspondant à un signal de réveil ou à un signal d'acquittement en fonction du circuit initiant le transfert de données, est généré par le circuit esclave sur un troisième des cinq fils. Le transfert de données depuis le circuit maître 102 vers le circuit esclave 104 est réalisé sur un quatrième des cinq fils et qui correspond au signal MOSI, et le transfert de données depuis le circuit esclave 104 vers le circuit maître 102 est réalisé sur un cinquième des cinq fils et qui correspond au signal MISO.

Le procédé de transfert de données mis en œuvre est de type full-duplex. Ainsi, le circuit maître 102 et le circuit esclave 104 réalisent simultanément des envois de paquets de données sur deux fils distincts du bus 106. Le procédé de transfert de données est mis en œuvre en utilisant cinq signaux différents : MOSI, MISO, SCLK, MASTER-CS et SLAVE-RDY, chacun de ces signaux étant transmis sur un des cinq fils du bus 106.

Dans le procédé de transfert de données mis en œuvre, les données sont transférées par paquets, chaque paquet comprenant une charge utile et un en-tête spécifiant au moins la longueur de la charge utile du paquet.

La figure 4 représente un exemple de structure de paquet de données 30 qui correspond, dans l'exemple décrit, à la forme sous laquelle les données sont transférées entre les circuits 102, 104. En variante, les paquets de données transférés entre les circuits 102, 104 peuvent avoir une structure différente de celle-ci.

Sur l'exemple de la figure 4, le paquet de données 30 comporte un en-tête 32, une charge utile 34 et un champ de pied de page 36. Dans cet exemple, l'en-tête 32 comporte un ou plusieurs octets 38 formant un nombre magique (« Magic code » en anglais), un ou plusieurs octets 40 spécifiant la longueur de la charge utile 34, et un ou plusieurs octets 42 formant un identifiant de type de protocole et permettant une utilisation du procédé de transfert avec différents protocoles de niveaux supérieurs et permettre par exemple un acheminement du paquet de données 30 à différents destinataires. En variante, l'en-tête 32 peut comporter une structure différente de celle de l'exemple de la figure 4. D'une manière générale, l'en-tête 32 comporte des données de contrôle servant à l'acheminement de la charge utile 34 au destinataire, comme par exemple : nombre magique, identifiant de type de protocole, somme de contrôle, etc. Selon un exemple particulier, l'en-tête 32 de chaque paquet de données 30 comporte au moins un champ de robustesse et un champ d'identification de type de protocole, et/ou chaque paquet de données 30 comporte un champ pied de page 36.

Sur l'exemple de la figure 4, le champ de pied de page 36 comporte un ou plusieurs octets 44 dits de bourrage (« stuffying bytes » en anglais) et un ou plusieurs octets 46 formant un nombre magique. En variante, le champ de pied de page 36 peut comporter une structure différente de celle de l'exemple de la figure 4.

La longueur totale du paquet 30 correspond à la somme des longueurs de l'en-tête 32, de la charge utile 34 et du champ de pied de page 36. Selon un exemple de réalisation, la longueur totale du paquet 30 est égale à un multiple de 32 bits, ce qui permet de faciliter la mise en œuvre d'un transfert de type DMA.

Selon un exemple de réalisation particulier, la longueur maximale de la charge utile 34 de chaque paquet 30 peut être définie au moment d'une compilation mise en œuvre préalablement au procédé de transfert de données. Par exemple, la longueur maximale de la charge utile 34 peut être de 2 ko. Cette longueur maximale peut servir à limiter l'empreinte mémoire dans les circuits 102, 104, en dimensionnant les buffers utilisés à une taille adaptée.

De plus, dans chaque paquet de données transféré entre les circuits 102, 104, la charge utile 34 peut comporter des octets de données utiles destinées à être transférées d'un circuit à l'autre et/ou des octets factices (« dummy bytes » en anglais). Ces octets factices servent notamment à résoudre d'éventuels problèmes d'alignement qui empêcheraient les circuits 102, 104 de réaliser des accès directs à la mémoire, ou DMA (« Direct Memory Access » en anglais) pour envoyer ou recevoir des données. Selon un exemple de réalisation particulier, la longueur de l'en-tête 32 peut être fixe et identique pour tous les paquets 30, quelle que soit la longueur de la charge utile 34 de chaque paquet 30.

Dans le procédé de transfert décrit, les signaux MOSI et MISO, transmis sur deux fils distincts du bus 106, sont utilisés pour le transfert de paquets de données 30 destinés à être échangés entre le circuit maître 102 et le circuit esclave 104. Les signaux MASTER-CS et SLAVE-RDY, transmis sur deux autres fils distincts du bus 106, sont utilisés pour le transport de signaux de commande échangés entre les circuits 102, 104, notamment avant les transferts des paquets de données 30. De tels signaux de commande correspondent par exemple à des signaux de réveil et/ou des signaux d'acquittement échangés entre les circuits 102, 104.

Par exemple, lorsque le circuit maître 102 souhaite envoyer des données au circuit esclave 104, le circuit maître 102 peut générer un signal non nul sur le fil du signal MASTER-CS, servant de signal de réveil du circuit esclave 104. En présence de plusieurs circuits esclave 104 couplés au bus 106, ce signal peut servir de signal de sélection de circuit, ou CS (« Chip Select » en anglais). Ensuite, lorsque le circuit esclave 104 est prêt pour le transfert de données avec le circuit maître 102, le circuit esclave 104 peut générer une impulsion sur le fil du signal SLAVE-RDY pour informer le circuit maître 102 de son état prêt à la réception, cette impulsion servant de signal d'acquittement envoyé en réponse à la réception du signal de réveil.

Selon un autre exemple, lorsque le circuit esclave 104 souhaite envoyer des données au circuit maître 102, le circuit esclave 104 peut générer un signal, par exemple une impulsion, sur le fil du signal SLAVE-RDY, servant de signal de réveil du circuit maître 102. Ensuite, lorsque le circuit maître 102 est prêt pour le transfert de données avec le circuit esclave 104, le circuit maître 102 peut générer un signal non nul sur le fil du signal MASTER-CS pour informer le circuit esclave 104 de son état prêt à la réception, ce signal servant de signal d'acquittement envoyé en réponse à la réception du signal de réveil.

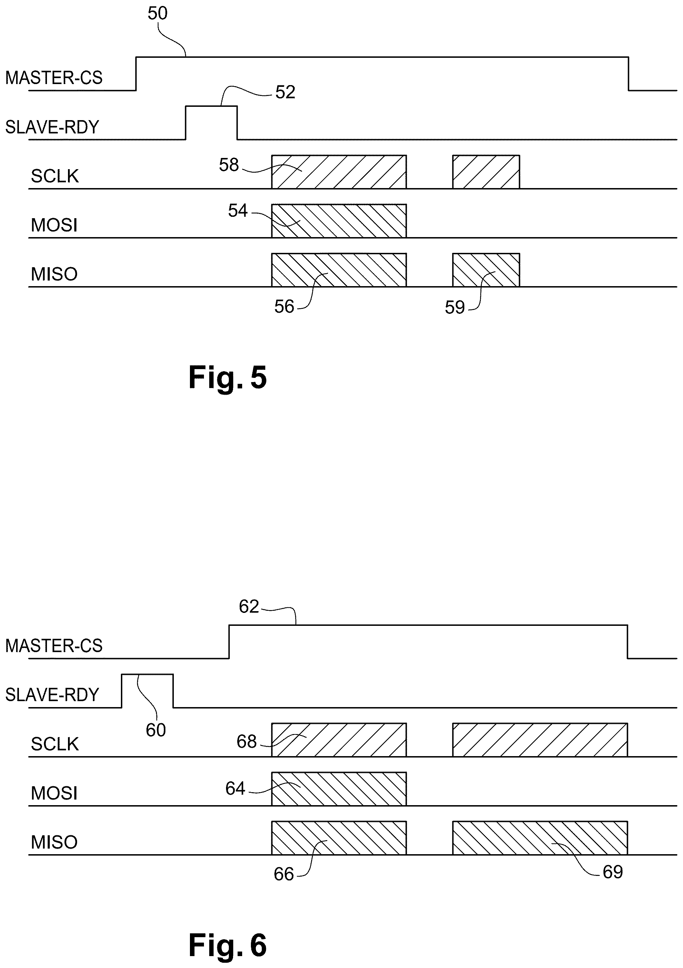

La figure 5 représente des exemples de signaux émis lors de la mise en œuvre du procédé de transfert de données lors d'un envoi d'au moins un paquet de données 30 initié par le circuit maître 102.

Dans cet exemple, le circuit maître 102 envoie tout d'abord un signal de réveil 50 sur le fil du signal MASTER-CS afin de réveiller le circuit esclave 104. A la réception de ce signal de réveil 50, et lorsque le circuit esclave 104 est prêt à réaliser le transfert de données, le circuit esclave 104 émet un signal d'acquittement 52 sur le fil du signal SLAVE-RDY à destination du circuit maître 102 afin de l'informer qu'il est prêt pour le transfert de données.

Le transfert de données est ensuite réalisé entre les circuits maître et esclave 102, 104, sur les fils des signaux MOSI et MISO. *N* octets de données 54, formant un ou plusieurs paquets de données 30, sont transférés sur la ligne du signal MOSI depuis le circuit maître 102 au circuit esclave 104. En parallèle, c'est-à-dire simultanément à l'envoi des données 54, *N* octets de données 56, formant un ou plusieurs autres paquets de données 30, sont transférées sur la ligne du signal MISO depuis le circuit esclave 104 au circuit maître 102. La valeur de *N* est définie par le circuit maître 102 préalablement à l'échange des paquets de données 30 entre les circuits maître et esclave 102, 104.

Lors de ce transfert des données 54, 56, si le circuit esclave 104 a moins de données à transmettre que le circuit maître 102, le circuit esclave 104 peut compléter la charge utile 34 du ou des paquets de données 30 envoyés au circuit maître 102 avec des octets nuls, ou « Null », afin que le nombre total d'octets envoyés au circuit maître 102 soit égal à N. Autrement dit, si la charge utile d'au moins un paquet de données destiné à être transféré du circuit esclave 104 au circuit maître 102 comporte un nombre d'octets inférieur à celui de la charge utile du ou des paquets de données à transférer du circuit maître 102 au circuit esclave 104, le circuit esclave 104 peut ajouter des octets Null à transmettre au circuit maître 102 de manière à ce que la quantité de données 56 soit égale à la quantité de données 54. En outre, en l'absence de données à transmettre du circuit esclave 104 au circuit maître 102, la charge utile du ou des paquets formant les données 56 peut ne comporter que des octets Null.

Le transfert des données 54, 56 est cadencé par un signal d'horloge 58 transmis sur le fil du signal SCLK.

Après le transfert des paquets de données 54, 56, le circuit maître 102 détermine un nombre d'octets restants à transférer du circuit esclave 104 au circuit maître 102 à partir de la valeur de la longueur de la charge utile 34 incluse dans l'en-tête 32 du ou des paquets 30 correspondant aux données 56 transférés du circuit esclave 104 au circuit maître 102, cette valeur étant lue par le circuit maître 102. Sur l'exemple de la figure 5, après le transfert des données 54, 56, il reste des octets restants à transférer du circuit esclave 104 au circuit maître 102. Ces octets restants, désignés par la référence 59, sont alors transférés sur le fil du signal MISO, du circuit esclave 104 au circuit maître 102, cet envoi étant cadencé par le signal d'horloge 58. En outre, dans cet exemple, parallèlement à l'envoi de ces octets restants 59, le circuit maître 102 peut envoyer des données qui sont ignorées par le circuit esclave 104.

Sur l'exemple de la figure 5, le signal MASTER-CS reste à l'état haut durant toute la durée du transfert de données entre le circuit maître 102 et le circuit esclave 104.

La valeur du nombre N, qui est déterminée par le circuit maître 102, est supérieure ou égale au nombre d'octets de l'en-tête 32 d'un des paquets de données 30. Sur l'exemple de la figure 5 qui correspond à un transfert de données initié par le circuit maître 102 pour l'envoi de données au circuit esclave 104 qui correspondent à au moins un premier paquet de données 30 dont la charge utile 34 n'est pas nulle, le nombre N est défini comme étant égal à la longueur totale du premier paquet de données 30. Ainsi, dans le cas d'un transfert de données initié par le circuit maître 102, ce dernier réalise l'envoi de l'ensemble des données destinées au circuit esclave 104, sans prendre en compte les éventuelles données que le circuit esclave 104 doit transmettre au circuit maître 102.

La figure 6 représente des exemples de signaux émis lors de la mise en œuvre du procédé de transfert de données lors d'un envoi d'au moins un paquet de données 30 initié par le circuit esclave 104.

Dans cet exemple, le circuit esclave 104 envoi tout d'abord un signal de réveil 60, par exemple sous la forme d'une impulsion, sur le fil du signal SLAVE-RDY afin de réveiller le circuit maître 102. A la réception de ce signal de réveil 60, et lorsque le circuit maître 102 est prêt à réaliser le transfert de données, le circuit maître 102 émet un signal d'acquittement 62 sur le fil du signal MASTER-CS à destination du circuit esclave 104 afin de l'informer qu'il est prêt pour le transfert de données entre les circuits maître et esclave 102, 104, sur les fils des signaux MOSI et MISO. *N* octets de données 64 sont transférés sur la ligne du signal MOSI depuis le circuit maître 102 au circuit esclave 104. En parallèle, c'est-à-dire simultanément à l'envoi des données 64, *N* octets de données 66 sont transférées sur la ligne du signal MISO depuis le circuit esclave 104 au circuit maître 102. Comme sur l'exemple précédent de la figure 5, la valeur de *N* est définie par le circuit maître 102 préalablement à l'échange des données 64, 66 entre les circuits maître et esclave 102, 104. Le transfert des données 64, 66 est déclenché par le circuit maître 102 via la génération d'un signal d'horloge 68 sur le fil du signal SCLK.

Après le transfert des données 64, 66, le circuit maître 102 détermine un nombre d'octets restants à transférer du circuit esclave 104 au circuit maître 102 à partir de la valeur de la longueur de la charge utile 34 incluse dans l'en-tête 32 du ou des paquets 30 correspondant aux données 66 transférés du circuit esclave 104 au circuit maître 102, cette valeur étant lue par le circuit maître 102. Sur l'exemple de la figure 6, après le transfert des données 64, 66, il reste des octets restants à transférer du circuit esclave 104 au circuit maître 102. Ces octets restants, désignés par la référence 69, sont alors transférés sur le fil du signal MISO, du circuit esclave 104 au circuit maître 102, cet envoi étant cadencé par le signal d'horloge 68. En outre, dans cet exemple, parallèlement à l'envoi de ces octets restants 69, le circuit maître 102 peut envoyer des données qui sont ignorées par le circuit esclave 104.

Sur l'exemple de la figure 6, le signal MASTER-CS reste à l'état haut durant toute la durée du transfert de données entre le circuit maître 102 et le circuit esclave 104.

Sur l'exemple de la figure 6 qui correspond à un transfert de données initié par le circuit esclave 104 pour l'envoi de données au circuit maître 102, le nombre *N* est par exemple défini comme étant égal au nombre d'octets de l'en-tête 32 d'un paquet de données 30. Une telle définition de la valeur de *N* est notamment pertinente lorsque le circuit maître 102 n'a pas de données à transférer au circuit esclave 104. Ainsi, dans cet exemple de transfert de données initié par le circuit esclave 104, le circuit maître 102 définit la valeur de *N* telle que seul l'en-tête 32 d'un paquet de données 30 soit échangé entre les circuits maître et esclave 102, 104. Ensuite, le nombre d'octets restants à transférer du circuit esclave 104 au circuit maître 102 est lu par le circuit maître 102 (du fait que l'en-tête 32 transféré au circuit maître 102 contient la longueur, c'est-à-dire le nombre d'octets, des données que le circuit esclave 104 doit transmettre au circuit maître 102), puis un transfert de ce nombre d'octets restants est réalisé.

Selon une variante, lorsque le circuit maître 102 comporte des données à transmettre au circuit esclave 104 mais que le transfert est initié par le circuit esclave 104, le nombre *N* peut être défini comme étant égal à la longueur totale du paquet de données à transmettre au circuit esclave 104. Ensuite, comme précédemment, après le transfert des données 64, 66, le nombre d'octets restants à transférer du circuit esclave 104 au circuit maître 102 est lu par le circuit maître 102, puis un transfert de ce nombre d'octets restants est éventuellement réalisé.

Selon une autre variante, la valeur de *N* peut être déterminée différemment des exemples précédents. Ainsi, dans le cas d'un transfert initié par le circuit esclave 104, la valeur de *N* peut être déterminée de manière heuristique, par exemple à partir de précédentes valeurs de *N* déterminées lors de précédents transferts de données entre le circuit esclave 104 et le circuit maître 102, et en choisissant une valeur minimale parmi ces précédentes valeurs de *N.* Selon un autre exemple, il est possible d'utiliser des systèmes de prédiction plus complexes.

Dans un exemple de réalisation particulier, préalablement à un transfert de données entre les circuits maître et esclave 102, 104, le circuit esclave 104 peut être configuré tel qu'il puisse recevoir au moins un paquet de données dont la longueur totale est égale à une longueur maximale prédéfinie.

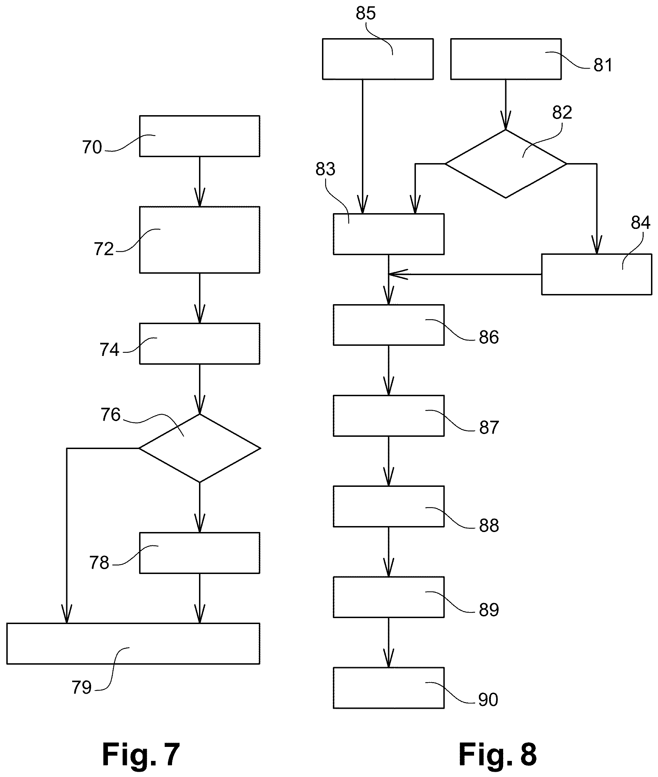

La figure 7 représente un exemple d'étapes mises en œuvre par le circuit maître 102 lors d'un procédé de transfert de données entre les circuits maître et esclave 102, 104.

Lors d'une première étape 70, un transfert de données est initié, soit par le circuit maître 102 via l'émission d'un signal de réveil sur le fil du signal MASTER-CS comme sur l'exemple de la figure 5, soit par le circuit esclave 104 via l'émission d'un signal de réveil sur le fil du signal SLAVE-RDY comme sur l'exemple de la figure 6. Dans le cas d'un transfert initié par le circuit maître 102, ce dernier attend la réponse du circuit esclave 104, c'est-à-dire l'envoi d'un signal d'acquittement sur le fil du signal SLAVE-RDY. Dans le cas d'un transfert initié par le circuit esclave 104, ce dernier attend la réponse du circuit maître 102, c'est-à-dire l'envoi d'un signal d'acquittement sur le fil du signal MASTER-CS.

Lors d'une deuxième étape 72, le circuit maître 102 détermine la valeur du paramètre *N,* c'est-à-dire le nombre d'octets à transférer entre les circuits maître et esclave 102, 104. Lorsque le transfert est initié par le circuit maître 102, la valeur de *N* peut être définie comme étant égale à la taille du ou des paquets de données 30 à transmettre au circuit esclave 104 par le circuit maître 102. Lorsque le transfert est initié par le circuit esclave 104, la valeur de *N* peut être définie comme étant égale à la taille d'un en-tête 32 d'un paquet de données 30.

Lors d'une troisième étape 74, *N* octets sont transférés du circuit maître 102 au circuit esclave 104 (correspondant aux données 54 et 64 dans les précédents exemples), et *N* octets sont transférés du circuit esclave 104 au circuit maître 102 (correspondant aux données 56 et 66 dans les précédents exemples). Dans tous les cas, le circuit maître 102 reçoit au moins l'en-tête 32 d'un paquet de données 30 envoyé par le circuit esclave 104.

Lors d'une quatrième étape 76, le circuit maître 102 détermine un nombre d'octets restants à transférer du circuit esclave 104 au circuit maître 102 à partir de la valeur de la longueur de la charge utile 34 incluse dans l'en-tête 32 transféré du circuit esclave 104 au circuit maître 102, et de la valeur de *N* précédemment déterminée.

S'il reste des données à transférer du circuit esclave 104 au circuit maître 102, ce transfert est alors réalisé (étape 78). Dans le cas contraire, le transfert est considéré comme état achevé (étape 79).

La figure 8 représente un exemple d'étapes mises en œuvre par le circuit esclave 104 lors d'un procédé de transfert de données entre les circuits maître et esclave 102, 104.

Si le circuit maître 102 envoie un signal de réveil (étape 81), le circuit esclave 104 vérifie si des données doivent être envoyées au circuit maître 102 (étape 82). Si c'est le cas, le circuit esclave 104 est alors configuré pour pouvoir réaliser l'envoi de ces données (étape 83). Si ce n'est pas le cas, le circuit esclave 104 est ici configuré pour réaliser un envoi d'octets Null (étape 84). En outre, avant la réception d'un signal de réveil, si le circuit esclave 104 a des données à envoyer au circuit maître 102 (étape 85), le circuit esclave 104 est configuré pour réaliser l'envoi de ces données (étape 83) sans attendre la réception d'un signal de réveil. Dans tous les cas, le circuit esclave 104 peut être configuré tel qu'il soit apte à recevoir un paquet de données de taille maximale (étape 86).

Au cours d'une étape suivante 87, le circuit esclave 104 envoie sur le fil du signal SLAVE-RDY un signal à destination du circuit maître 102, qui correspond soit à un signal de réveil du circuit maître 102 soit à un signal d'acquittement.

Le transfert des données entre les circuits maître et esclave 102, 104 est alors réalisé (étape 88).

Si toutes les données destinées au circuit maître 102 n'ont pas été transférées, cela est détecté par le circuit maître 102 qui déclenche alors le transfert des données restantes du circuit esclave 104 au circuit maître 102 (étape 89). L'étape 90 représente l'achèvement du transfert des données entre les circuits maître et esclave 102, 104.

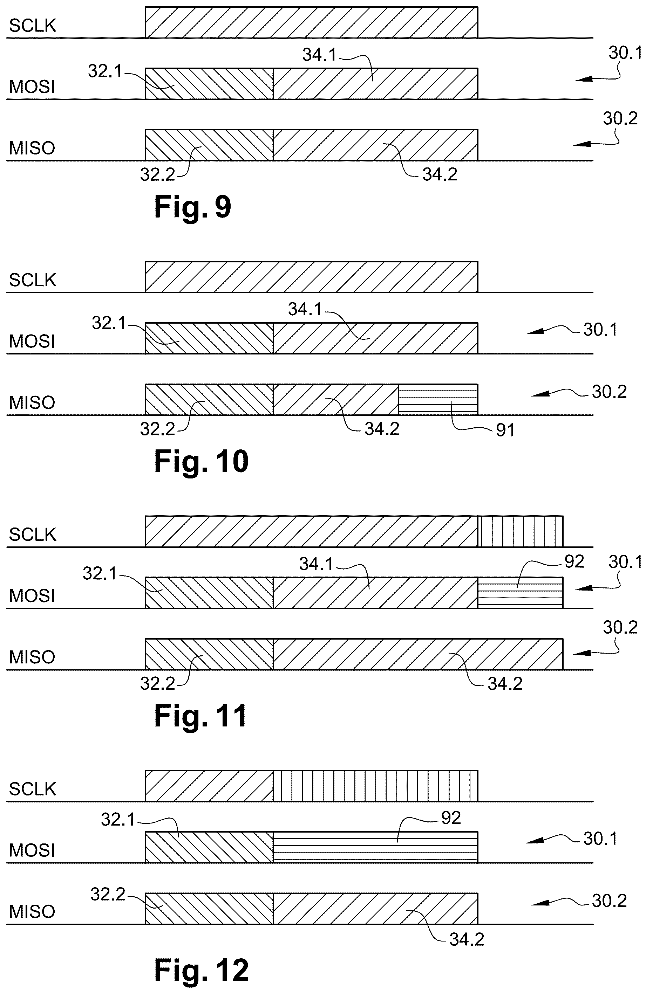

La figure 9 représente un premier exemple de transfert de paquets de données 30.1, 30.2 réalisé entre le circuit maître 102 et le circuit esclave 104. Dans cet exemple, le transfert de données est initié par le circuit maître 102 qui comporte une charge utile 34.1 de *TX* octets à transférer, avec *TX* non nul spécifié dans l'en-tête 32.1 du paquet de données 30.1 envoyé par le circuit maître 102. Dans cet exemple, le circuit esclave 104 ne comporte pas de données à transférer au circuit maître 102. Ainsi, l'en-tête 32.2 du paquet de données 30.2 envoyé par le circuit esclave 104 spécifie une longueur de charge utile RX nulle (*RX* désignant le nombre d'octets à transférer au circuit maître 102), et la charge utile 34.2 du paquet de données 30.2 transféré depuis le circuit esclave 104 au circuit maître 102 comporte des octets Null.

La figure 10 représente un deuxième exemple de transfert de paquets de données 30.1, 30.2 réalisé entre le circuit maître 102 et le circuit esclave 104. Dans ce deuxième exemple, le transfert de données est initié soit par le circuit maître 102 qui comporte une charge utile 34.1 de *TX* octets à transférer, avec *TX* non nul, soit par le circuit esclave 104 qui comporte une charge utile 34.2 de *RX* octets à transférer, avec *RX* non nul. Dans cet exemple *RX < TX,* et la charge utile 34.2 du paquet de données 30.2 envoyé par le circuit esclave 104 est complétée avec des octets Null désignés par la référence 91. Ainsi, dans cet exemple, si la charge utile 34.1 du paquet de données 30.1 transféré du circuit maître 102 au circuit esclave 104 parallèlement au paquet de données 30.2 comporte un nombre d'octets supérieur à celui de la charge utile 34.2 du paquet de données 30.2, le circuit esclave 104 ajoute des octets Null à la charge utile 34.2 du paquet de données 30.2 tel que la longueur totale du paquet de données 30.2 soit égale à celle du paquet de données 30.1.

La figure 11 représente un troisième exemple de transfert de paquets de données 30.1, 30.2 réalisé entre le circuit maître 102 et le circuit esclave 104. Dans ce troisième exemple, le transfert de données est initié soit par le circuit maître 102 qui comporte une charge utile de *TX* octets à transférer, avec *TX* non nul, soit par le circuit esclave 104 qui comporte une charge utile de *RX* octets à transférer, avec *RX* non nul. Dans cet exemple *TX < RX,* et donc la charge utile 34.1 du paquet de données 30.1 envoyé par le circuit maître 102 est complétée avec des octets Null 92 après que le circuit maître 102 ait déterminé la présence d'octets restants à transférer depuis le circuit esclave 104. Ainsi, dans cet exemple, si la charge utile 34.2 du paquet de données 30.2 transféré du circuit esclave 104 au circuit maître 102 parallèlement au paquet de données 30.1 comporte un nombre d'octets supérieur à celui de la charge utile 34.1 du paquet de données 30.1, le circuit maître 102 ajoute des octets Null à la charge utile 34.1 du paquet de données 30.1 tel que la longueur totale du paquet de données 30.1 soit égale à celle du paquet de données 30.2.

La figure 12 représente un quatrième exemple de transfert de paquets de données 30.1, 30.2 réalisé entre le circuit maître 102 et le circuit esclave 104. Dans ce quatrième exemple, le transfert de données est initié par le circuit esclave 104 qui comporte une charge utile de *RX* octets à transférer, avec *RX* non nul. Dans cet exemple, le circuit maître 102 ne comporte pas de données de charge utile à transférer au circuit esclave 104. La charge utile du paquet de données 30.2 envoyé par le circuit maître 102 comporte uniquement des octets Null 92.

Dans les différentes configurations décrites, les circuits maître et esclave 102, 104 mettent en œuvre un mécanisme de « poignée de main », ou « handshake ». Dans les exemples précédemment décrits, ce mécanisme correspond à l'envoi du signal d'acquittement sur le fil du signal SLAVE-RDY par le circuit esclave 104 après la réception du signal de réveil envoyé par le circuit maître 102 dans le cas d'un transfert initié par le circuit maître 102, ou bien correspond à l'envoi du signal d'acquittement sur le fil MASTER-CS par le circuit maître 102 après la réception du signal de réveil envoyé par le circuit esclave 104 dans le cas d'un transfert initié par le circuit esclave 104. Un tel mécanisme permet de bien contrôler le cadencement des transferts de données réalisés entre les circuits maître et esclave 102, 104. De plus, les signaux de réveil envoyés pour initier un transfert de données peuvent servir à sortir d'un état de veille le circuit recevant ce signal de réveil, sans que le circuit qui envoie le signal de réveil n'ait à connaître à l'avance l'état du circuit auquel le signal de réveil est envoyé.

Des exemples de performances obtenues avec le procédé de transfert de données décrit sont donnés ci-dessous :
Pour une transmission d'un paquet de données tel que l'en-tête + la charge utile + le champ de pied de page ait une taille de 2052 octets (2048 octets de charge utile + 4 octets d'en-tête et champ de pied de page), avec un bus SPI 106 permettant une transmission allant jusqu'à 40 Mbit/s, la durée de la transmission est égale à : 40 µs (durée de mise en œuvre du mécanisme de « poignée de main ») + 2052 * 8 bits / 40 MHz = 450,4 µs. La vitesse de transmission est dans ce cas égale à 2048 * 8 / 450,4 = 36,4 Mbit/s, soit une réduction de débit d'environ 10% par rapport au débit maximal en raison du mécanisme de « poignée de main » mis en œuvre.

Pour une transmission d'un paquet de données tel que l'en-tête + la charge utile + le champ de pied de page ait une taille de 4100 octets (4096 octets de charge utile + 4 octets d'en-tête et champ de pied de page), avec un bus SPI 106 permettant une transmission allant jusqu'à 40 Mbit/s, la durée de la transmission est égale à : 40 µs (durée de mise en œuvre du mécanisme de « poignée de main ») + 4100 * 8 bits / 40 MHz = 860 µs. La vitesse de transmission est dans ce cas égale à 4096 * 8 / 860 = 38,1 Mbit/s.

Pour une transmission d'un paquet de données tel que l'en-tête + la charge utile + le champ de pied de page ait une taille de 2052 octets (2048 octets de charge utile + 4 octets d'en-tête et champ de pied de page), avec un bus SPI 106 permettant une transmission allant jusqu'à 80 Mbit/s, la durée de la transmission est égale à : 40 µs (durée de mise en œuvre du mécanisme de « poignée de main ») + 2052 * 8 bits / 80 MHz = 245 µs. La vitesse de transmission est dans ce cas égale à 2048 * 8 / 245 = 67 Mbit/s.

Pour une transmission d'un paquet de données tel que l'en-tête + la charge utile + le champ de pied de page ait une taille de 4100 octets (4096 octets de charge utile + 4 octets d'en-tête et champ de pied de page), avec un bus SPI 106 permettant une transmission allant jusqu'à 80 Mbit/s, la durée de la transmission est égale à : 40 µs (durée de mise en œuvre du mécanisme de « poignée de main ») + 4100 * 8 bits / 80 MHz = 450 µs. La vitesse de transmission est dans ce cas égale à 4096 * 8 / 450 = 71 Mbit/s.

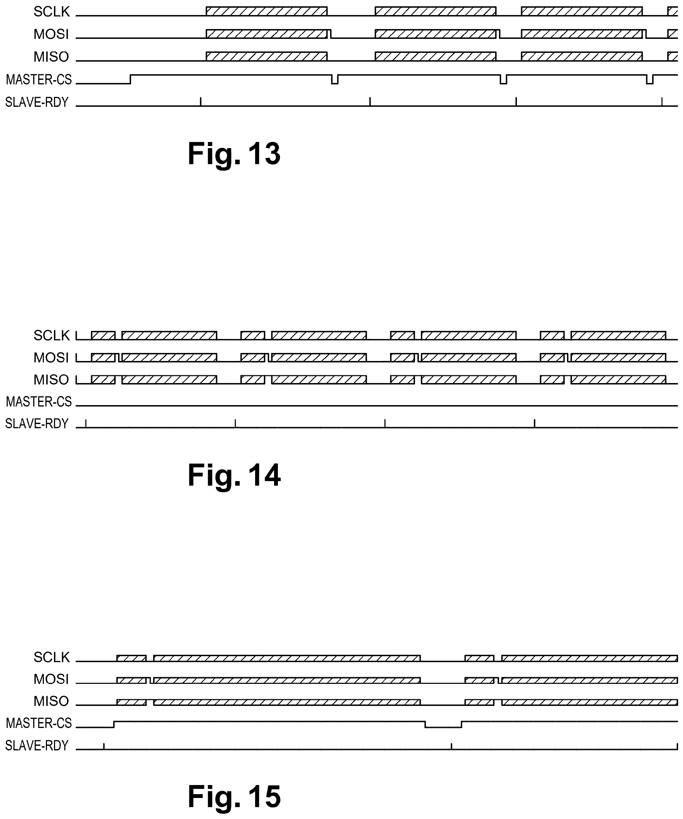

La figure 13 représente des exemples de signaux lors d'un transfert de données entre les circuits maître et esclave 102, 104 et initié par le circuit maître 102, lorsque seul le circuit maître 102 comporte des données à transmettre.

La figure 14 représente des exemples de signaux lors d'un transfert de données entre les circuits maître et esclave 102, 104 et initié par le circuit esclave 104, lorsque seul le circuit esclave 104 comporte des données à transmettre.

La figure 15 représente des exemples de signaux lors d'un transfert de données entre les circuits maître et esclave 102, 104 et initié par le circuit esclave 104, lorsque chacun des circuits maître et esclave 102, 104 comporte des données à transmettre.

Dans les différents exemples décrits, les longueurs des données de charge utile transmises entre les circuits peuvent être adaptées en complétant les charges utiles avec des octets Null afin que les circuits échangent le même nombre d'octets. Ainsi, il est possible d'obtenir un procédé de transfert de données de type full-duplex sans avoir à utiliser des intervalles de temps de valeur fixe pour le transfert des données.

Le procédé de transfert décrit a pour avantage de réaliser un transfert de données sur une liaison SPI avec une faible consommation électrique, et un bon contrôle des flux de données. Ce procédé représente un très bon compromis entre la complexité de la mise en œuvre et l'efficacité des transferts de données réalisés. En outre, les transferts directs réalisés entre les circuits, sans passer par exemple par un processeur central, permet de réduire la charge de ce processeur central. En outre, le transfert de données réalisé correspond à une transmission de type duplex intégral.

Le procédé proposé forme un protocole qui permet d'envoyer et de recevoir des données simultanément. Un en-tête contenant des informations sur la taille de paquet permet de vérifier si le paquet reçu est complet et, le cas échéant, de poursuivre la procédure pour récupérer les octets manquants. Un mécanisme d'amélioration des performances peut compléter le protocole en transmettant systématiquement une taille minimale d'octets, ce qui permet dans la plupart des cas de recevoir et de transmettre l'intégralité d'un message.

Le procédé est également robuste et permet bonne gestion des erreurs de transmission. Le procédé proposé répond bien aux contraintes imposées aux systèmes embarqués.

Le procédé peut être mis en œuvre avec un contrôle matériel direct ou par l'intermédiaire d'un système d'exploitation temps réel.

Le procédé de transfert peut être mise en œuvre dans un processeur hôte et dans un coprocesseur qui sont couplés entre eux par une liaison SPI à cinq fils mais qui peuvent communiquer différemment avec d'autres éléments, par exemple pour des applications à faible consommation, des applications sans fil, par exemple Wi-Fi, Bluetooth, bande de 2,4 GHz, ou bien des application du domaine de l'internet des objets (IoT, ou « Internet of Things » en anglais).

Le procédé peut être mis en œuvre pour des applications qui nécessitent une communication efficace et une gestion optimale de l'énergie, en particulier dans les systèmes embarqués, les dispositifs mobiles, la technologie portable, l'IoT, les applications automobiles, les dispositifs médicaux, l'électronique grand public et l'équipement de réseau.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Procédé de transfert de données sur une liaison (106) de type interface périphérique série, SPI, à cinq fils entre au moins un circuit maître (102) et au moins un circuit esclave (104), dans lequel :
- les données sont transférées par paquets (30) comprenant chacun une charge utile (34) et un en-tête (32) spécifiant la longueur de la charge utile (34) du paquet (30), et
- lors d'un transfert de données entre les circuits maître et esclave (102, 104), le circuit maître (102) définit un nombre *N* d'octets à transférer, puis détermine, après un transfert de *N* octets du circuit maître (102) au circuit esclave (104) et de *N* octets du circuit esclave (104) au circuit maître (102), un nombre d'octets restants à transférer du circuit esclave (104) au circuit maître (102) à partir d'une valeur de la longueur de la charge utile (34) incluse dans l'en-tête (32) d'au moins un paquet de données (30) transféré du circuit esclave (104) au circuit maître (102), cette valeur étant lue par le circuit maître (102).

2. Procédé selon la revendication 1, dans lequel le nombre N d'octets est supérieur ou égal au nombre d'octets de l'en-tête (32) d'un des paquets de données (30).

3. Procédé selon l'une quelconque des revendications précédentes, dans lequel, lors d'un transfert, initié par le circuit maître (102) et allant du circuit maître (102) au circuit esclave (104), d'au moins un premier paquet de données (30) dont la charge utile (34) n'est pas nulle, le nombre N d'octets est défini comme étant égal à la longueur totale du premier paquet de données (30).

4. Procédé selon la revendication 3, dans lequel, lors du transfert du premier paquet de données (30), si la charge utile (34) d'au moins un deuxième paquet de données (30), transféré du circuit esclave (104) au circuit maître (102) parallèlement au premier paquet de données (30), comporte un nombre d'octets inférieur à celui de la charge utile (34) du premier paquet de données (30), le circuit esclave (104) ajoute des octets Null à la charge utile (34) du deuxième paquet de données (30) tel que la longueur totale du deuxième paquet de données (30) soit égale à la longueur totale du premier paquet de données (30).

5. Procédé selon l'une quelconque des revendications 3 ou 4, dans lequel, lors du transfert du premier paquet de données (30), si la charge utile (34) d'un deuxième paquet de données (30), transféré du circuit esclave (104) au circuit maître (102) parallèlement au premier paquet de données (30), comporte un nombre d'octets supérieur à celui de la charge utile (34) du premier paquet de données (30), le circuit maître (102) ajoute des octets Null à la charge utile (34) du premier paquet de données (30) tel que la longueur totale du premier paquet de données (30) soit égale à la longueur totale du deuxième paquet de données (30).

6. Procédé selon l'une quelconque des revendications 3 à 5, dans lequel le transfert du premier paquet de données (30) est initié par le circuit maître (102) par l'envoi d'un signal de réveil (50) au circuit esclave (104), et dans lequel le premier paquet de données (30) est transféré après la réception, par le circuit maître (102), d'un signal d'acquittement (52) envoyé par le circuit esclave (104) en réponse à la réception du signal de réveil (50).

7. Procédé selon l'une quelconque des revendications précédentes, dans lequel, lors d'un transfert, initié par le circuit esclave (104) et allant du circuit esclave (104) au circuit maître (102), d'un troisième paquet de données (30) dont la charge utile (34) n'est pas nulle, le nombre N d'octets est défini comme étant égal au nombre d'octets de l'en-tête (32) d'un des paquets de données (30) ou égal à la longueur totale d'un quatrième paquet de données (30) transféré du circuit maître (102) au circuit esclave (104) parallèlement au troisième paquet de données (30).

8. Procédé selon la revendication 7, dans lequel, lors du transfert du troisième paquet de données (30), si la charge utile (34) d'un quatrième paquet de données (30), transféré du circuit maître (102) au circuit esclave (104) parallèlement au troisième paquet de données (30), comporte un nombre d'octets inférieur à celui de la charge utile (34) du troisième paquet de données (30), le circuit maître (102) ajoute des octets Null à la charge utile (34) du quatrième paquet de données (30) tel que la longueur totale du quatrième paquet de données (30) soit égale à la longueur totale du troisième paquet de données (30).

9. Procédé selon l'une quelconque des revendications 7 ou 8, dans lequel, lors du transfert du troisième paquet de données (30), si la charge utile (34) d'un quatrième paquet de données (30), transféré du circuit maître (102) au circuit esclave (104) parallèlement au troisième paquet de données (30), comporte un nombre d'octets supérieur à celui de la charge utile (34) du troisième paquet de données (30), le circuit esclave (104) ajoute des octets Null à la charge utile (34) du troisième paquet de données (30) tel que la longueur totale du troisième paquet de données (30) soit égale à la longueur totale du quatrième paquet de données (30).

10. Procédé selon l'une quelconque des revendications 7 à 9, dans lequel le transfert du troisième paquet de données (30) est initié par le circuit esclave (104) par l'envoi d'un signal de réveil (60) au circuit maître (102), et dans lequel le troisième paquet de données (30) est transféré après la réception, par le circuit esclave (104), d'un signal d'acquittement (62) envoyé par le circuit maître (102) en réponse à la réception du signal de réveil (60).

11. Procédé selon l'une quelconque des revendications précédentes, dans lequel, préalablement à un transfert de données entre les circuits maître et esclave (102, 104), le circuit esclave (104) est configuré tel qu'il puisse recevoir un paquet de données (30) dont la longueur totale est égale à une longueur maximale prédéfinie d'un paquet de données (30).

12. Procédé selon l'une quelconque des revendications précédentes, dans lequel le transfert de données entre les circuits maître et esclave (102, 104) est synchronisé par un signal d'horloge (58, 68) envoyé par le circuit maître (102) sur un premier des cinq fils, le transfert de données depuis le circuit maître (102) vers le circuit esclave (104) est réalisé sur un deuxième des cinq fils, le transfert de données depuis le circuit esclave (104) vers le circuit maître (102) est réalisé sur un troisième des cinq fils, l'envoi de signaux de commande depuis le circuit maître (102) vers le circuit esclave (104) est réalisé sur un quatrième des cinq fils, et l'envoi de signaux de commande depuis le circuit esclave (104) vers le circuit maître (102) est réalisé sur un cinquième des cinq fils.

13. Procédé selon l'une quelconque des revendications précédentes, dans lequel l'en-tête (32) de chaque paquet de données (30) comporte au moins un champ de robustesse et un champ d'identification de type de protocole, et/ou dans lequel chaque paquet de données (30) comporte un champ pied de page (36).

14. Circuit électronique (102, 104) comprenant au moins une interface périphérique série, configuré pour mettre en œuvre le procédé selon l'une quelconque des revendications précédentes.

15. Système électronique (100) comprenant plusieurs circuits électroniques (102, 104) selon la revendication 14 et couplés entre eux par au moins un bus (106) de type SPI.
